# Europäisches Patentamt

# European Patent Office

# Office européen des brevets

(11) Numéro de publication : **0 390 685 B1**

(12) **FASCICULE DE BREVET EUROPEEN**

(45) Date de publication du fascicule du brevet :
03.06.92 Bulletin 92/23

(51) Int. Cl.⁵ : **F16B 17/00, B29C 65/60**

(21) Numéro de dépôt : **90400850.5**

(22) Date de dépôt : **29.03.90**

(54) **Procédé de liaison d'éléments pour la fabrication de pièces en matériau composite thermostructural.**

(30) Priorité : **30.03.89 FR 8904181**

(43) Date de publication de la demande :
03.10.90 Bulletin 90/40

(45) Mention de la délivrance du brevet :
03.06.92 Bulletin 92/23

(84) Etats contractants désignés :
BE CH DE ES GB IT LI

(56) Documents cités :
EP-A- 0 268 957
DE-A- 3 640 484
US-A- 4 556 591

(73) Titulaire : **SOCIETE EUROPEENNE DE PROPULSION**
**24 rue Salomon de Rothschild**
**F-92150 Suresnes (FR)**

(72) Inventeur : **Vives, Michel**
**24, rue des Houx, Le Taillan Medoc**
**F-33320 Eysines (FR)**
Inventeur : **Sourdoulaud, Yvon**
**18, avenue des Chanterelles**
**F-33370 Artigues près Bordeaux (FR)**

(74) Mandataire : **Joly, Jean-Jacques et al**
**CABINET BEAU DE LOMENIE 55, rue d'Amsterdam**
**F-75008 Paris (FR)**

Jouve, 18, rue Saint-Denis, 75001 PARIS

## Description

La présente invention concerne un procédé de liaison d'éléments pour la fabrication de pièces en matériau composite thermostructural (voir par exemple US-A- 4556 591).

Les matériaux composites thermostructuraux sont essentiellement constitués par une texture de renfort fibreuse densifiée à coeur par une matrice, les fibres de la texture de renfort et la matrice étant sélectionnées en vue d'applications demandant d'excellentes propriétés mécaniques à des températures élevées. Des exemples typiques de matériaux composites thermostructuraux sont les matériaux carbone-carbone (texture de renfort en fibres de carbone et matrice en carbone), carbone-céramique (structure de renfort en fibres de carbone et matrice en céramique, par exemple carbure de silicium), et céramique-céramique (structure de renfort en fibres céramiques et matrice en céramique).

Pour certaines applications, notamment dans les domaines aéronautique et spatial, la réalisation de pièces de grandes dimensions en matériaux composites thermostructuraux est de plus en plus demandée. Il en est ainsi par exemple pour des ensembles voile-raidisseurs constituant des pièces de structure d'avion spatial.

Il pourrait être envisagé de réaliser une pièce de grandes dimensions en plusieurs parties fabriquées séparément et assemblées finalement par des moyens mécaniques ou par collage. Toutefois, les techniques d'assemblage d'éléments préfabriqués en matériaux composites thermostructuraux sont d'une mise en oeuvre difficile ou ne donnent pas totalement satisfaction.

Il a alors été envisagé de réaliser séparément des éléments de texture de renfort puis de les assembler, éventuellement après prédensification, avant densification par le matériau constitutif de la matrice simultanément au sein des éléments de texture de renfort assemblés. L'assemblage des éléments de texture de renfort est réalisé simplement en les amenant en contact mutuel et en les maintenant en contact au moyen d'un outillage. La liaison entre les éléments de texture de renfort est réalisée par le matériau de la matrice qui est co-infiltré au sein de la porosité de ces éléments. Cette co-infiltration est réalisée par exemple par mise en oeuvre d'une technique bien connue d'infiltration en phase vapeur.

Ce type de liaison par co-infiltration nécessite des grandes surfaces de contact, pour que la liaison par le matériau de la matrice soit efficace, et présente un risque permanent de décohésion au moment de la fabrication et de l'utilisation.

Aussi, l'invention a-t-elle pour but de fournir un procédé permettant de réaliser des pièces de grandes dimensions en matériau composite thermostructural sans les inconvénients de l'art antérieur.

Plus particulièrement, l'invention a pour but de fournir un procédé de fabrication de pièces en matériau composite thermostructural par co-densification d'éléments de texture de renfort préassemblés, qui permette d'obtenir des pièces ne présentant pas de risque de décohésion même lorsque la surface de contact mutuel entre les éléments de texture de renfort est réduite.

Conformément à l'invention, ce but est atteint du fait qu'une liaison structurale est réalisée entre les éléments de la texture de renfort par au moins un moyen de blocage en texture fibreuse qui est compacté avant d'être mis en place dans un logement correspondant formé dans l'un au moins des éléments de la texture de renfort, afin d'épouser la forme du logement et s'y verrouiller par relâchement de la texture fibreuse par suite de la suppression du compactage préalable.

Le verrouillage du moyen de blocage dans son logement correspondant assure un préassemblage efficace des éléments de la texture de renfort avant co-densification par la matrice et s'oppose à la décohésion pendant le stade de densification de la pièce. De plus, ce verrouillage se combine avec le collage réalisé par le matériau de la matrice co-infiltré au sein de la porosité des éléments constitutifs de la texture de renfort, y compris le moyen de blocage, pour garantir une liaison efficace éliminant pratiquement le risque de décohésion lors de l'utilisation de la pièce et ne demandant pas une grande surface de contact entre les éléments de la texture de renfort préassemblés.

Le moyen de blocage peut être sous forme d'une cheville en texture fibreuse qui est mise en place dans des logements alignés formés dans les éléments de la texture de renfort à assembler.

En variante, le moyen de blocage est constitué par une partie de l'un des éléments de texture de renfort à assembler.

Les fibres constitutives des éléments de la texture de renfort et les fibres constitutives de la texture fibreuse du moyen de blocage sont en une même matière, notamment carbone ou céramique, ou en des matières compatibles entre elles, notamment vis-à-vis des effets thermiques (dilatation).

Le compactage du moyen de blocage peut être réalisé au moyen d'un outillage dans lequel le moyen de blocage est maintenu jusqu'à sa mise en place dans le logement correspondant.

En variante, le maintien du moyen de blocage à l'état compacté peut être assuré par imprégnation au moyen d'un produit liant entre elles les fibres de la texture fibreuse formant le moyen de blocage, lequel produit est susceptible d'être éliminé ou ramolli pour permettre un relâchement de la texture fibreuse après mise en place du moyen de blocage compacté et imprégné dans le logement correspondant.

L'invention sera mieux comprise à la lecture de la description faite ci-après, à titre indicatif mais non limitatif, en référence aux dessins annexés, sur lesquels :

– les figures 1 à 5 illustrent les étapes successives de fabrication d'une pièce en matériau composite thermostructural par co-densification d'éléments de texture de renfort assemblés suivant un premier mode de mise en oeuvre du procédé conforme à l'invention ;

– les figures 6 et 7 illustrent une variante du mode d'assemblage d'éléments de texture de renfort ;

– les figures 8 à 10 illustrent une variante du procédé de compactage et de maintien à l'état compacté de l'organe de blocage ;

– les figures 11 et 12 illustrent encore une autre variante du mode d'assemblage d'éléments de texture de renfort ;

– les figures 13 et 14 illustrent les étapes successives de fabrication d'une pièce en matériau thermostructural suivant un deuxième mode de mise en oeuvre de l'invention ;

– la figure 15 illustre une variante du procédé des figures 13 et 14; et

– la figure 16 illustre une application du procédé selon l'invention pour réaliser une pièce en matériau composite thermostructural constituée par un ensemble voile-raidisseurs.

D'une façon générale, la présente invention est applicable dans le cas de fabrication d'une pièce composite dont la texture de renfort peut être réalisée en plusieurs éléments séparés qui sont ensuite assemblés avant leur densification simultanée pour obtenir la pièce recherchée.

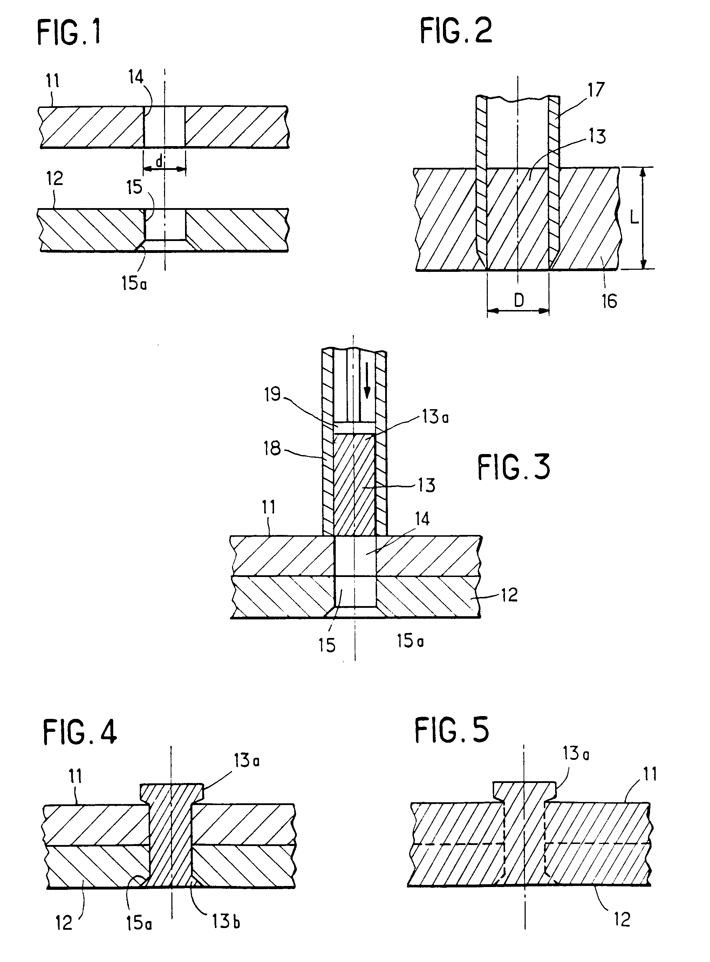

Dans l'exemple illustré par les figures 1 à 5, la pièce composite à fabriquer est obtenue par densification d'une texture de renfort formée par assemblage de deux éléments de texture de renfort 11 et 12 en forme de plaques (figure 1). Tout type connu de texture de renfort fibreuse pour matériau composite pourra être utilisé pour réaliser les éléments 11 et 12, pour conférer à la pièce les propriétés souhaitées en fonction de l'utilisation envisagée. Ainsi, les éléments 11 et 12 peuvent être réalisés en une même texture fibreuse constituée par exemple par un empilement de strates, telles que des couches de tissu non liées entre elles (textures bidimensionnelles, ou 2D), ou liées entre elles par exemple par implantation de fils transversalement par rapport aux strates ou par aiguilletage (textures tridimensionnelles ou 3D). Selon la forme de la pièce à réaliser, les éléments 11 et 12 pourront avoir des formes plus ou moins complexes, par exemple des formes profilées. Le maintien des éléments 11 et 12 dans la forme appropriée peut alors être réalisé par imprégnation de la texture fibreuse par une résine. Celle-ci est par exemple choisie pour pouvoir être éliminée avant ou au cours de l'opération d'infiltration de la matrice, ou pour laisser un résidu compatible avec le matériau de la matrice.

Dans certains cas, les éléments 11 et 12 peuvent être consolidés, ou faiblement densifiés, par le matériau de la matrice choisi déposé en phase vapeur ou par voie liquide.

L'assemblage structural des éléments 11 et 12 est réalisé au moyen d'au moins une, et de préférence plusieurs chevilles 13 insérées et bloquées dans des logements constitués chacun par des alésages 14, 15 alignés formés dans les parties des plaques 11, 12 qui viennent en contact mutuel pour constituer la texture de renfort complète de la pièce à réaliser. Afin de conserver une tenue suffisante au niveau des alésages, les éléments 11 et 12 sont de préférence en une texture 2D imprégnée ou une texture 3D, notamment une texture 3D aiguilletée. Par souci de simplicité, une seule cheville 13 et un seul ensemble correspondant d'alésages 14, 15 sont représentés sur les figures. Comme le montre notamment la figure 1, un chanfrein 15a est formé à l'extrémité de l'alésage 15 du côté de la plaque 12 opposé à celui en contact avec la plaque 11.

Comme le montre la figure 2, la cheville 13 est obtenue par exemple par découpe d'un cylindre dans une plaque 16 de texture fibreuse 3D au moyen d'un outil 17. La longueur L du cylindre (c'est-à-dire l'épaisseur de la plaque 16) est légèrement supérieure à la somme des épaisseurs des plaques 11 et 12 (c'est-à-dire la longueur du logement formé par les alésages 14 et 15 bout à bout), tandis que le diamètre D du cylindre est supérieur au diamètre d des alésages 14 et 15 et est au moins égal au diamètre maximum de l'alésage 15 au niveau du chanfrein 15a.

Après découpe, la cheville 13 est compactée circonférentiellement et logée dans un tube 18 dont le diamètre intérieur est sensiblement égal à celui des alésages 14 et 15. Le tube 18 étant placé coaxialement avec les alésages 14 et 15 des pièces 11 et 12 accolées (figure 3), la cheville 13 peut être introduite dans ceux-ci au moyen d'un piston 19 guidé dans le tube 18 et appuyant sur une extrémité 13a de la cheville 13.

L'introduction de la cheville 13 est réalisée par exemple du côté de la plaque 11 et est poursuivie jusqu'à ce que son extrémité 13b opposée à celle sur laquelle agit le piston 19 parvienne au niveau de la face externe de la plaque 12. Après retrait du tube 18, la cheville 13 prend alors la forme illustrée par la figure 4. L'effet de compactage par le tube 18 ayant cessé, la texture fibreuse de la cheville 13 se relâche à son extrémité 13b, pour occuper la partie chanfreinée de l'alésage 15, et à son extrémité 13a, pour former une tête du côté de la face externe de la plaque 11, puisque la longueur L de la cheville 13 est supérieure à la somme des épaisseurs des plaques 11 et 12. L'extrémité élargie 13b de la cheville 13 et la tête 13a de celle-ci ont pour effet un verrouillage de la cheville 13 dans les alésages 14 et 15 créant ainsi une liaison structurale par obstacle entre les éléments de texture de renfort 11 et 12. Entre ses extrémités 13a et 13b, la cheville 13 reste compactée.

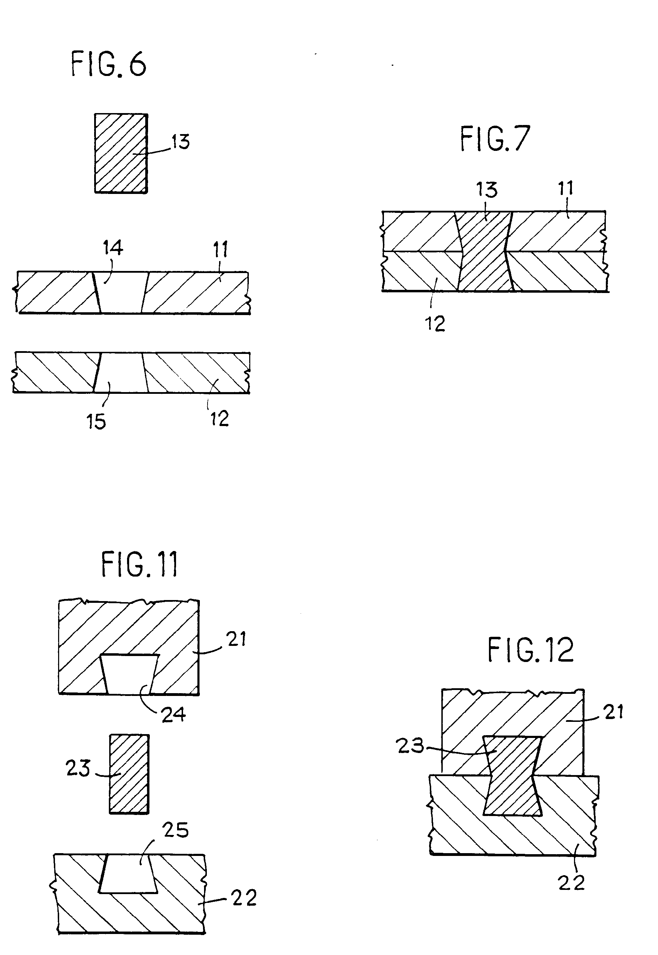

Lorsque les plaques 11 et 12 sont assemblées, elles sont densifiées ensemble, ainsi que la cheville 13. La densification est réalisée par exemple par infiltration en phase vapeur du matériau constitutif de la matrice au sein de la porosité accessible de la texture fibreuse. L'assemblage des éléments de la texture de renfort par liaison structurale permet de maintenir parfaitement la cohésion de l'ensemble lors de la densification. Après mise en place de la matrice (figure 5), le matériau constitutif de celle-ci réalise un collage des éléments 11 et 12 et de la cheville 13 du fait de sa continuité à l'interface entre ceux-ci. Ce collage, combiné avec le verrouillage mécanique produit par la cheville 13 assure à la pièce obtenue une grande résistance à la décohésion. Après densification, la tête 13a de la cheville 13 faisant saillie vers l'extérieur peut être éliminée par usinage.

En variante, un chanfrein est également formé à l'extrémité de l'alésage 14 située du côté externe de la plaque 11, la longueur de la cheville 13 étant alors sensiblement égale à la somme des épaisseurs des plaques 11 et 12. Un effet de liaison structurale avec blocage entre les éléments 11 et 12 est obtenu par expansion de la cheville à ses deux extrémités dans les parties coniques de plus grand diamètre des alésages 14 et 15.

Selon une autre variante, les alésages 14 et 15 sont formés sans chanfrein et la cheville 13 a une longueur suffisante pour former une tête par expansion de la texture fibreuse à chacune de ses extrémités faisant saillie hors des alésages 14 et 15, l'effet de blocage étant produit par les têtes formées aux deux extrémités de la cheville et s'appuyant sur les faces externes des plaques 11 et 12.

Toujours en variante, comme montré par la figure 6, les alésages 14 et 15 formés dans les plaques 11 et 12 sont coniques, avec leur plus grand diamètre situé du côté externe des plaques. Après son introduction dans les alésages 14 et 15 alignés axialement, par exemple avec des moyens analogues à ceux montrés par la figure 3, la cheville 13 occupe tout le volume des alésages 14 et 15 et verrouille mutuellement les plaques 11 et 12 (figure 7).

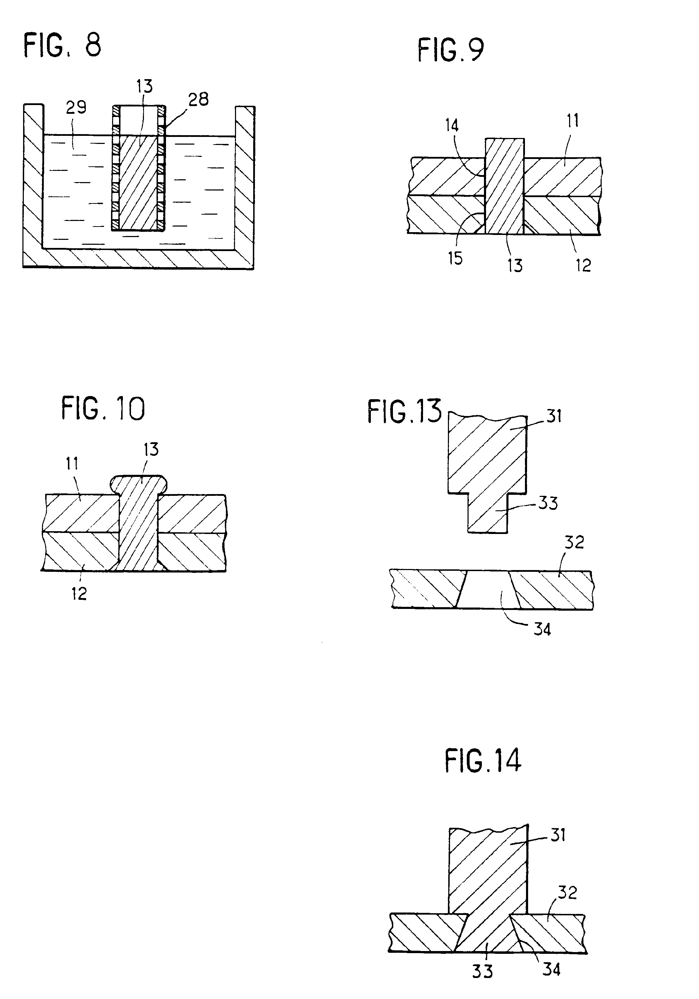

Un autre procédé permettant de maintenir à l'état compacté la cheville 13 en texture fibreuse avant son verrouillage à l'intérieur des alésages 14 et 15 des éléments 11 et 12 est illustré par les figures 8 à 10.

La cheville 13, obtenue par exemple par découpe dans une plaque de texture fibreuse de type 3D comme illustré par la figure 2, est compactée circonférentiellement en étant introduite dans une gaine cylindrique 28 éventuellement ajourée (figure 8). La cheville 13 ainsi maintenue à l'état compacté est imprégnée au moyen d'une résine par immersion dans un bain 29.

Après imprégnation par la résine, puis séchage, la gaine 28 peut être retirée et la cheville 13, maintenue dans sa forme compactée par la résine, est introduite dans les alésages 14 et 15 (figure 9).

La résine d'imprégnation est choisie pour pouvoir être éliminée ou au moins ramollie avant l'infiltration de la matrice. L'élimination ou le ramollissement de la résine a pour effet la suppression de l'effet de compactage (figure 10), de sorte que la cheville 13, par le relâchement de la texture fibreuse, se verrouille dans les alésages 14 et 15 de la même façon que décrit plus haut en référence aux figures 1 à 5.

L'élimination ou le ramollissement de la résine d'imprégnation est réalisé par traitement chimique ou par élévation de la température. Dans ce dernier cas, il est avantageux d'utiliser la phase de montée en température précédant l'infiltration proprement dite du matériau de la matrice.

De préférence, on utilise une résine fugitive qui est éliminée par traitement thermique, pratiquement sans laisser de résidu, avant codensification des éléments 11 et 12. Une résine laissant un résidu après ramollissement ou pyrolyse peut être utilisée dans la mesure où le résidu est compatible avec le matériau de la matrice.

En variante, la cheville 13, compactée dans la gaine 28, est imprégnée par un liquide solidifié par refroidissement permettant, après retrait de la gaine 28, de conserver à la cheville son état compacté. Le dégel du liquide d'imprégnation permet le relâchement de la texture constitutive de la cheville 13, après mise en place de celle-ci.

Les figures 11 et 12 montrent l'assemblage de deux pièces de texture de renfort 21 et 22 par des chevilles 23 compactées et imprégnées qui sont introduites chacune dans deux trous borgnes tronconiques 24 et 25 formés dans les pièces 21 et 22. Les diamètres des trous 24 et 25 croissent en direction de leur fond de sorte qu'après relâchement du compactage, les chevilles 23 assurent le verrouillage mutuel des pièces 21 et 22.

Les figures 13 et 14 illustrent encore un autre mode de mise en oeuvre du procédé conforme à l'invention selon lequel les moyens de blocage entre éléments de la texture de renfort sont constitués par des parties d'au moins un des éléments à assembler.

Dans cet exemple, la pièce composite est obtenue par densification d'une texture de renfort fibreuse formée par assemblage de deux éléments 31, 32. L'élément 31 est par exemple sous forme d'une plaque devant être assemblée perpendiculairement à l'élément 32 également en forme de plaque. L'assemblage est réalisé au moyen de doigts 33 formés sur un bord de l'élément 31 et destinés à pénétrer dans des trous 34 formés dans l'élément 32. Les doigts 33 et les trous 34 sont obtenus par usinage (sur les figures, un seul doigt 33 et un seul trou 34 sont représentés par souci de simplicité).

Comme le montre la figure 13, le doigt 33 est de forme cylindrique et est usiné dans la texture de l'élément 31 après que celle-ci ait été au moins localement compactée et imprégnée. Le trou 34 est un trou tronconique traversant ou borgne, selon l'épaisseur de l'élément 32. Le doigt 33 est introduit à l'état compacté dans le trou 34. Le diamètre du doigt 33 est choisi de manière que le doigt, après relâchement du compactage, occupe tout le trou 34 (figure 14).

Après assemblage, les éléments 31 et 32 sont co-densifiés par infiltration en phase vapeur du matériau de la matrice. Celui-ci réalise entre les éléments 31 et 32 un collage qui se combine à la liaison structurale par les doigts 33 pour assurer à la pièce réalisée la cohésion désirée.

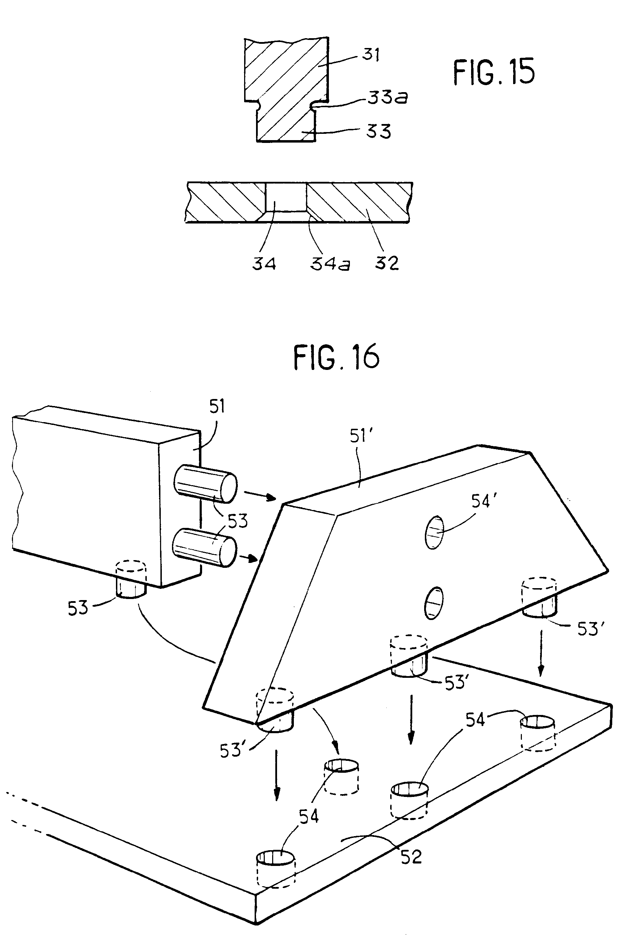

En variante, comme illustré par la figure 15, les trous 34 sont des alésages ayant une forme cylindrique, avec un chanfrein 34a formé à une extrémité de l'alésage pour permettre le blocage du doigt 33 dans l'alésage par expansion de la texture du doigt au niveau du chanfrein. Une gorge 33a peut être formée à la base des doigts 33 pour éviter, après relâchement de la texture fibreuse des doigts, la formation d'un bourrelet à l'interface entre les éléments 31 et 32.

Comme déjà indiqué, l'invention trouve une application particulière dans la réalisation de pièces en matériau composite thermostructural formant des ensembles voile-raidisseurs.

La texture de renfort fibreuse est alors réalisée sous forme d'éléments distincts 51, 51', 52 correspondant aux parties de la pièce qui constituent les raidisseurs et le voile. L'assemblage des éléments de la texture de renfort est réalisé par liaison structurale par obstacle au moyen de doigts 53, 53' formés sur les bords des éléments 51, 51', d'alésages 54 formés dans l'élément 52 et destinés à recevoir des doigts 51, 51', et d'alésages 54' formés dans l'élément 51' et destinés à recevoir des doigts 53, comme le montre la figure 16.

Au lieu d'être intégrés à l'un des éléments de la texture de renfort, les moyens de liaison 53, 53' peuvent être réalisés sous forme de pions ou chevilles distincts qui sont mis en place dans des trous alignés des éléments à assembler.

## Revendications

1. Procédé de fabrication de pièces en matériau composite thermostructural par co-densification d'éléments de texture de renfort (11, 12 ; 21, 22 ; 31, 32 ; 51, 51', 52) préassemblés, caractérisé en ce qu'une liaison structurale est réalisée entre les éléments de la texture de renfort par au moins un moyen de blocage en texture fibreuse (13 ; 23 ; 33 ; 53, 53') qui est compacté avant d'être mis en place dans un logement correspondant (14, 15 ; 24, 25 ; 34 ; 54, 54') formé dans l'un au moins des éléments de la texture de renfort, afin d'épouser la forme du logement et s'y verrouiller par relâchement de la texture fibreuse par suite de la suppression du compactage préalable, les éléments de texture de renfort et le moyen de blocage étant ensuite co-densifiés.

2. Procédé selon la revendication 1, caractérisé en ce que le moyen de blocage est sous forme d'une cheville (13) en texture fibreuse qui est mise en place dans des logements (14, 15) alignés formés dans les éléments (11, 12) de texture de renfort à assembler.

3. Procédé selon la revendication 2, caractérisé en ce que les éléments (11, 12) de texture de renfort à assembler sont imprégnés par une résine.

4. Procédé selon la revendication 2, caractérisé en ce que les éléments (11, 12) de texture de renfort à assembler sont faiblement densifiés par le matériau de la matrice choisi pour la co-densification des éléments.

5. Procédé selon la revendication 1, caractérisé en ce que le moyen de blocage est constitué par une partie (23 ; 33 ; 53, 53') de l'un des éléments de texture de renfort à assembler.

6. Procédé selon l'une quelconque des revendications 1 à 5, caractérisé en ce que le compactage du moyen de blocage (13) est réalisé au moyen d'un outillage (18) dans lequel le moyen de blocage est maintenu jusqu'à sa mise en place dans le logement correspondant.

7. Procédé selon l'une quelconque des revendications 1 à 5, caractérisé en ce que le moyen de blocage (13) est compacté, puis imprégné au moyen d'un produit liant entre elles les fibres de la texture fibreuse du moyen de blocage afin de maintenir celui-ci à l'état compacté, le produit d'imprégnation étant susceptible d'être éliminé ou ramolli pour permettre un relâchement de la texture fibreuse après mise en place du moyen de blocage compacté et imprégné dans le logement correspondant.

## Patentansprüche

1. Verfahren zum Herstellen von Teilen aus thermostrukturiertem Verbundmaterial durch Zusammenverdichtung von vorher zusammengefügten Verstärkungsstrukturelementen (11, 12; 21, 22; 31, 32; 51, 51', 52), **dadurch gekennzeichnet**, daß eine strukturelle Verbindung zwischen den Verstärkungsstrukturelementen durch wenigstens eine Blockiereinrichtung aus Faserstruktur (13; 23; 33; 53, 53') erzeugt wird, die zusammengedrückt oder verfestigt wurde, bevor sie vor Ort gesetzt wird in eine entsprechende Aufnahme (14, 15; 24, 25; 34; 54, 54'), die in wenigstens einem der Elemente der Verstärkungsstruktur ausgebildet ist, um die Form der Aufnahme anzunehmen und sich mit ihr zu verriegeln durch Loslassen der Faserstruktur im Nachgang des vorher aufgebrachten Zusammendruckdruckes, wobei die Verstärkungsstrukturelemente und die Blockierungseinrichtung danach zusammen verdichtet werden.

2. Verfahren nach Anspruch 1, **dadurch gekennzeichnet,** daß die Blockierungseinrichtung in Form eines Pflocks (13) aus Faserstruktur gebildet ist, der in ausgerichtete Ausnahmen (14, 15) gesetzt wird, die in den Verstärkungsstrukturelementen (11, 12), die zusammenzusetzen sind, ausgebildet sind.

3. Verfahren nach Anspruch 2, **dadurch gekennzeichnet,** daß die Verstärkungsstrukturelemente (11, 12), die zusammenzufügen sind, mit einem Harz imprägniert sind.

4. Verfahren nach Anspruch 2, **dadurch gekennzeichnet,** daß die Verstärkungsstrukturelemente (11, 12), die zusammenzufügen sind, leicht verdichtet werden durch das Material der Matrize, das für die Zusammenverdichtung der Elemente gewählt wird.

5. Verfahren nach Anspruch 1, **dadurch gekennzeichnet,** daß die Blockierungseinrichtung gebildet wird aus einem bereich (23; 33; 53, 53') des einen der Verstärkungsstrukturelemente, die zusammenzufügen sind.

6. Verfahren nach einem der Ansprüche 1 bis 5, **dadurch gekennzeichnet,** daß das Zusammendrücken der Blockierungseinrichtung (13) mittels eines Werkzeugs (18) erzeugt wird, in dem die Blockierungseinrichtung gehalten wird, bis sie in der entsprechenden Aufnahme eingebracht ist.

7. Verfahren nach einem der Ansprüche 1 bis 5, **dadurch gekennzeichnet,** daß die Blockierungseinrichtutung (13) zusammengedrückt wird, sodann imprägniert wird mittels eines Produkts, das die Fasern der Faserstruktur der Blockierungseinrichtung untereinander verbindet, um diese im kompakten bzw. zusammengedrückten Zustand zu halten, wobei das Imprägniermittel geeignet ist, eliminiert oder weichgemacht zu werden, um ein Loslassen der Faserstruktur zu erlauben, nach Setzen der verfestigten und imprägnierten Blockiereinrichtung in die entsprechende Aufnahme.

## Claims

1. A process for the manufacture of thermostructural composite material parts by co-densification of pre-assembled elements of reinforcement texture (11,12;21,22;31,32;51,51',52), characterized in that a structural connection is produced between the elements of the reinforcement texture by at least one blocking means in fibrous texture (13;23;33;53,53') that is subjected to compacting prior to engagement inside a corresponding lodging (14,15;24,25;34;54, 54') formed in at least one of the elements of the reinforcement texture, in order to conform to the shape of said lodging and lock thereinto by relaxation of the fibrous texture upon elimination of the prior compacting, the elements of reinforcement texture and the blocking means being thereafter co-densified.

2. Process according to claim 1, characterized in that the blocking means is in the form of a dowel (13) of fibrous texture engaged inside aligned lodgings formed within the elements (11,12) of reinforcement texture to be assembled.

3. Process according to claim 2, characterized in that the elements (11,12) of reinforcement texture to be assembled are impregnated with a resin.

4. Process according to claim 2, characterized in that the elements (11,12) of reinforcement texture to be assembled are lightly densified by the material of a matrix chosen for the co-densification of the elements.

5. Process according to claim 1, characterized in that the blocking means is constituted by a portion (23;33;53,53') of one of the elements of reinforcement texture to be assembled.

6. Process according to claim 1, characterized in that the compacting of the blocking means (13) is obtained by means of a tool (18) in which the blocking means is held until the insertion thereof in the corresponding lodging.

7. Process according to any one of claims 1 to 5, characterized in that the blocking means (13) is compacted and then impregnated with a product binding together the fibers of the fibrous texture of the blocking means in order to maintain said blocking means in a compacted state, the impregnated product being capable of being eliminated or softened to allow a relaxation of the fibrous texture after insertion of the compacted and impregnated blocking means into the corresponding lodging.

FIG.1

FIG.2

FIG.3

FIG.4

FIG.5

FIG.6

FIG.7

FIG.11

FIG.12

FIG. 8

FIG.9

FIG. 10

FIG.13

FIG.14

FIG.15

FIG.16